# EUROPEAN PATENT APPLICATION

(11) **EP 2 213 445 A1**
(43) Date of publication of application: **04.08.2010**
(21) Application number: 10152008.8
(22) Date of filing: 28.01.2010
(51) Int. Cl.: B29C 70/44, B29C 35/02, B29C 35/04

(54) **Method for fabricating and curing composite structures**

(30) Priority: 29.01.2009 US 361686
(71) Applicant: Lockheed Martin Corporation, Bethesda, Maryland 20817 (US)
(72) Inventor: Ashton, Todd, Fort Worth, TX 76116 (US); Smith, Ron, Fort Worth, TX 76101 (US); McKee, Scott, Fort Worth, TX 76101 (US); Benson, Ross, Fort Worth, TX 76101 (US)
(74) Representative: Lockey, Robert Alexander

(57) **Abstract**

Composite structures are fabricated and cured without applying external heat from an autoclave or oven, This technique uses composite preforms to form high strength, three-dimensional co-bonded joints, and thermoplastic conformal mandrels such as rota-molded vacuum bags (112). The bags form internal tooling within the structure and provide molding with integral fittings that circulate heated air within the bags. The exteriors of the bags are simultaneously under vacuum and exert pressure on the composite elements of the structure that are being cured. This internally-applied heat initially causes to the bags to soften and fully conform to the internal shapes of the structure that are being co-bonded. The heart then transfers into the uncured materials, causing them to cure without unnecessarily heating the entire structure or any required tooling.

## Description

### BACKGROUND OF THE INVENTION

### 1. Technical Field

The present invention relates in general to fabricating composite materials and, in particular, to an improved system, method and apparatus for fabricating composite structures without applying external heat from an autoclave or oven.

### 2. Description of the Related Art

Composite materials comprising a fiber-reinforced resin matrix are often used to fabricate lightweight, high strength parts such as, for example, fuselages and stabilizers for aircraft. Optimized designs for these types of parts will typically involve geometries that cause the internal tooling to become trapped upon cure. Fabrication of composite parts with trapped geometries typically includes use of a solid mandrel having an exterior shape generally conforming to the desired interior shape of the part. Uncured composite materials are then laid up on the mandrel and cured by applying heat and pressure according to well-known methods.

To address the problem of mandrel removal, the industry typically uses either segmented metal mandrels or expendable mandrels. Reusable segmented metal mandrels have been used with a wide variety of geometries and sizes. They are extracted from a cured structure by disassembling the mandrel and removing it piece by piece. These mandrels are very costly and present handling problems due to their extreme weight and complexity, and because they are somewhat damage-prone. Expendable mandrels are typically made of plaster, water soluble eutectic salts or even eutectic metals. In the case of plaster, it is removed by breaking it away from the part using impact devices after the composite part has been cured in an oven or autoclave. The broken plaster pieces are then discarded at a significant cost to the manufacturer. The use of breakaway plaster is labor intensive, can result in damage to cured composite parts, and produces large quantities of waste which are costly to dispose of.

The use of eutectic salts or metals may be environmentally hazardous, and although some percentage may be recoverable, recovery is not cost effective in many cases due to contamination and/or degradation of the material. These materials also tend to fuse to, and therefore contaminate the interior surface of a structure, making it necessary to provide a reliable barrier, which also needs to be subsequently removed. These mandrels are heavy, particularly those made with eutectic metals. Salt mandrels are comparatively fragile, therefore the handling of heavy and/or fragile mandrels presents yet another drawback.

All four types of mandrels are unsuitable for co-bonded structures because they do not allow direct application of outward pressure to the interior surfaces. Instead, pressure is applied only to the outside, requiring the outer surfaces and tooling to move inward. While this method does provide accurate interior mold lines, it is difficult to control outer mold line contours and it becomes equally challenging to maintain distortion-free fiber alignment. The substantial thermal mass associated with these materials presents yet another complication when the time comes to quickly and uniformly heat the structure during cure. This heat-up lag can increase the risk of having to scrap a structure by simply forcing the cure process to go beyond its acceptable, specified parameters.

Expandable elastomeric soft tooling has occasionally been used as part of the bagging envelope in specific types of composite structure fabrication. In these cases, it is used to apply outward pressure to interior surfaces. One such process utilizes an expandable tool where pressure is applied to the interior of the tooling and expanded to force the uncured composite material to conform and consolidate against the surfaces of an external tool. These mandrels are limited to simple design configurations in which dimensional control of the part's internal surfaces part is not critical. While this system does address the problem of consolidating internal elements of a composite structure such as those encountered in co-bonded assemblies, its flexible nature cannot provide a rigid backbone upon which these various elements can be located or assembled prior to cure. Complex and cumbersome tooling must therefore be used for that purpose.

As a result, non-recurring and recurring costs increase due to the additional tooling required and/or the complications arising from having to extract tooling prior to cure, or from having to bag around these tooling elements. It is difficult for these mandrels to achieve uniform pressure distribution across the laminate during a cure cycle. Finally, elastomeric soft tooling is limited in its ability to be extracted intact from severely trapped areas. It is comparatively expensive, easily damaged and the elastomer itself cannot withstand more than a few cure cycles before having to be replaced.

Traditional bagging systems, such as nylon film, also typically require tooling to support the interior cavities. In addition, these systems are difficult to conform to, and be extracted from, complex geometry. The film has a tendency to bridge over corners, increasing the risk of bag failure considerably during autoclave curse. This usually results in a poorly consolidated laminate which will have to be scrapped. Although tooling is typically added to minimize this risk, it becomes a labor intensive remedy.

U.S. Patent 6,589,472, to Benson et al*,* discloses a method and tooling that facilitates fabrication of trapped geometry composite structure while minimizing the aforementioned costs and risks. At room temperature, it acts as a rigid mandrel during lay-up and assembly of a structure. During cure, it is flexible and yet an inherently reliable vacuum bag. The tool provides support to the composite structure during assembly, consolidates the laminate during cure, and is safely and easily removable from the structure after it is cured.

That method of fabricating composite structure uses thermoplastics to create a conformal vacuum bag/temporary tool. The tool provides support to elements within a composite structure prior to cure and improved pressure distribution during cure by functioning as a high integrity pressure intensifier/vacuum bag. The thermoplastic conformal tool/vacuum bag is designed to conform to the surfaces and cavities of the composite structure, including closed or trapped geometry. The elements may be uncured when assembled and placed into the cure tool or fixture and externally heated. Although the conformal tool becomes trapped in such geometry upon cure, it is removed by reheating the cured composite assembly to an intermediate temperature. This softens the material to collapse and allows it to be easily withdrawn.

Although that technique is workable for most composite components, some components are far too large or cumbersome to be heated and cured in cure-processing equipment (e.g., autoclaves or ovens). The manufacture of large, unitized complex composite structures, however, is highly desirable from the standpoint of reducing part and fastener counts, and reducing weight. Unfortunately, the size of these structures is typically limited by the size of available ovens or autoclaves. In the case of experimental programs, the lack of adequately-sized equipment frequently becomes the deciding factor as to whether a large-scale R&D project can be initiated. In a production mode, the cost of operating autoclaves or other large equipment that are large enough to handle unusually large structures and their corresponding tooling also can be a significant factor in the decision to proceed with the project.

A second limiting factor for such projects is the time required to heat and elevate the temperature of the tooling and structure to the required cure temperature at the desired heat-up rate. As the size of objects increases, the tooling required to hold the various structural elements in position can become quite massive. In the autoclave or oven environment that applies external heating, this tooling is typically the first mass to heat up, followed by the part itself, In the case of co-bonded structures, this heating sequence is opposite of that which is desirable. If the assembly is large enough, this heat-up lag can actually terminate the process prematurely since many of these materials have a selected time-temperature "window" that must be met in order for the properties of the material to be maximized.

A third limiting factor for these projects is the problem of out-time, or working life, of the uncured composite materials. If the required materials have a working life of less than two weeks, a point can be reached in which a large structure cannot realistically be assembled and prepared for cure within that span. Thus, an improved solution that addresses and resolves these limitations would be desirable.

### SUMMARY OF THE INVENTION

Embodiments of a system, method, and apparatus for fabricating and curing composite structures without the need for external heating environments are disclosed. The invention utilizes several technologies, including woven composite preforms to form high strength joints, and thermoplastic conformal mandrels. The manufacture of large co-bonded structures is enabled by the combined use of these technologies. By taking additional advantage of the unique characteristics of the mandrels, this invention completely eliminates the need for a heating environment that would otherwise apply heat externally to the tooling structure.

In some embodiments, the composite parts being cured are located completely within the structure at the intersecting joints of the elements. The mandrels or bags may form internal tooling and vacuum bagging that may be molded with integral fittings. These fittings are used to attach ducting, through which heated air is circulated into the interior of each individual bag. The exteriors of the bags are simultaneously under vacuum and exert pressure on the elements being cured. This exclusively internal heat source initially causes the bag to soften and fully conform to the shapes being co-bonded. The heat then transfers to the uncured material, eventually causing it to cure. Although this technique may cause any needed large external tooling to eventually warm to some degree, the invention effectively removes it from the heat transfer cycle, which greatly improves heat transfer mode of the cure process.

In one embodiment, individual recirculating air heaters are linked to a common controller to provide a tailored, non-fixed heat source for curing the composite elements. The heating of structure is direct and zone-controlled, which offers the possibility of assembling and curing a large structure in less cumbersome, more manageable segments. Significantly, this design helps achieve heat-up rates for composite resin systems and removes concerns about non-uniform heat application. After the structure has been cured, the bags are removed. If they are within a trapped geometry of the structure, the same recirculating air heaters may be used to warm the bags to permit softening and easy removal. The ducted heating system provides an ideal means of quickly re-heating only the bags and removing them without subjecting the entire structure to undesirable thermal stresses.

The foregoing and other objects and advantages of the present invention will be apparent to those skilled in the art, in view of the following detailed description of the present invention, taken in conjunction with the appended claims and the accompanying drawings.

### BRIEF DESCRIPTION OF THE DRAWINGS

So that the manner in which the features and advantages of the present invention are attained and can be understood in more detail, a more particular description of the invention briefly summarized above may be had by reference to the embodiments thereof that are illustrated in the appended drawings. However, the drawings illustrate only some embodiments of the invention and therefore are not to be considered limiting of its scope as the invention may admit to other equally effective embodiments.

FIG. 1 is a perspective view of a representative thermoplastic conformal tool/vacuum bag in accordance with this invention;

FIG. 2 illustrates the intended partial assembly of composite members. Actual assembly of these members will be accomplished using the conformal tool/vacuum bag of FIG. 1, as subsequently described;

FIG. 3 illustrates the assembly of composite members of FIG. 2 utilizing several thermoplastic members of FIG. 1 as locating tools or fixtures;

FIG. 4 illustrates a completed assembly of the composite members of FIG. 3 and several conformal tools/vacuum bags of FIG. 1;

FIG. 5 is an enlarged cross-sectional view of a portion of the thermoplastic conformal tool/vacuum bag assembly of FIG. 4, taken along lines 6--6 of FIG. 4;

FIG. 6 is an enlarged exploded, partial cross-sectional view of the thermoplastic conformal tool/vacuum bag assembly as shown in FIG. 5;

FIG. 7 is an enlarged cross-sectional view of a portion of the thermoplastic conformal tool/vacuum bag assembly as shown in FIG. 5, after it has been debulked and is ready to be placed in an oven or autoclave for curing;

FIG. 8 illustrates another embodiment of a thermoplastic conformal tool/vacuum bag in accordance with this invention. In this embodiment, the invention becomes an external vacuum bag with self-locating features, thereby facilitating the bagging of complicated geometries;

FIG. 9 is an exploded enlarged view of a portion of the thermoplastic conformal tool/vacuum bag of FIG. 8 taken along lines 10--10 of FIG. 8;

FIG. 10 is a schematic isometric view of one embodiment of a structural member being fabricated in accordance with the invention;

FIG. 11 is an enlarged isometric view of a portion of the structural member of FIG. 10, and is constructed in accordance with the invention;

FIG. 12 is a schematic isometric view of one embodiment of a composite curing system constructed in accordance with the invention; and

FIG. 13 is a schematic isometric view of one embodiment of a heating module for the composite curing system of FIG. 12 and is constructed in accordance with the invention.

### DETAILED DESCRIPTION OF THE INVENTION

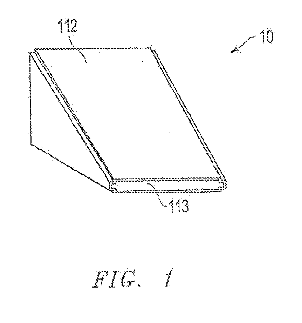

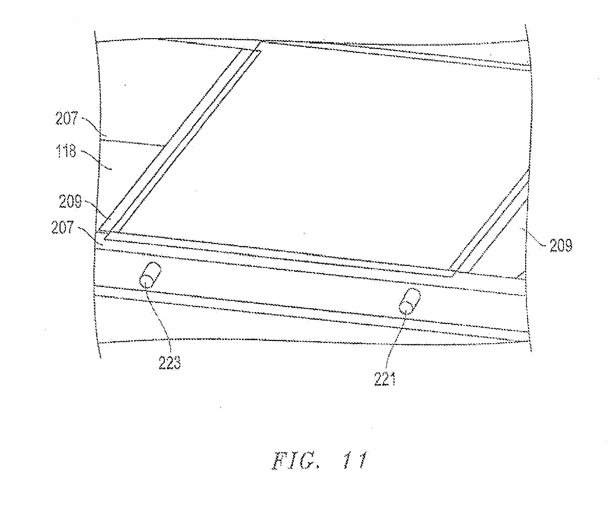

Referring to FIGS. 1 - 13, embodiments of a system, method and apparatus for fabricating large, unitized three-dimensional composite structures without an autoclave or oven are disclosed. The invention is well suited for various applications, such as those commonly encountered in the manufacture of aircraft and aerospace components.

The invention combines technologies involving composite preforms to form high strength joints, and thermoplastic conformal mandrels, and/or other materials and bag forming methods. For example, the invention may combine three-dimensional, woven composite preforms to form high strength three-dimensional co-bonded joints, and rota-molded vacuum bags, or RM bags. Other embodiments may comprise two-dimensional lay-ups for various applications, such as corners. U.S. Pat. Nos. 6,589,472, 6,676,882, 6,835,261, 6,849,150 and 6,712,099, are incorporated by reference in their entirety.

One component of the invention is directed to an improved method for fabricating a composite structure for, but not limited to, aircraft. As used herein, the phrase "substantially conforms" is intended to mean a shape or geometry whose dimensions approximate a surface or cavity of a composite structure or member. The phrases "tool/vacuum bag" and "mandrel" are used interchangeably.

Referring now to FIG. 1, a perspective view 10 of one embodiment of a thermoplastic conformal tool/vacuum bag is shown. Thermoplastic conformal tool/vacuum bag 112 is a core member in this embodiment, structured to dimensions that substantially conform to a surface or cavity of a composite structure. Tool/vacuum bag 112 is rigid and hollow to provide support to at least a portion of the composite structure and to provide outward pressure distribution while the composite is being cured. In this example, tool/vacuum bag 112 has a substantially triangular longitudinal cross-section and is generally wedge-shaped. Tool/vacuum bag 112 has thin rectangular opening 113 into its interior to allow entry of recirculating heated air.

Tool/vacuum bag 112 may be prepared from conventional thermoplastic materials such as, but not limited to, acrylonitrile-butadiene-styrene (ABS) thermoplastic resin. Tool/vacuum bag 112 is fabricated via conventional means, such as blow molding, vacuum-forming, rotational molding or the like.

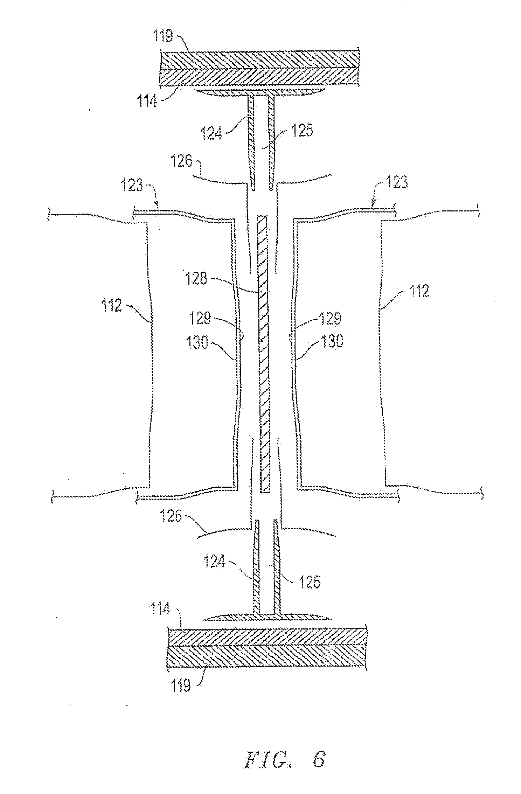

As shown in FIG. 6, a liner 123 is wrapped around each tool/vacuum bag 112 prior to its use as a locating tool. Liner 123 may include a film 129 and a vent cloth 130. Film barrier 129, preferably TEFLON® film, is used to facilitate removal of tool/vacuum bag 112. Porous vent cloth 130 is used to provide a pathway for volatile vapors, gases and trapped air to escape the assembly while the composite is being cured. Vent cloth 130 may be a felt or fabric material.

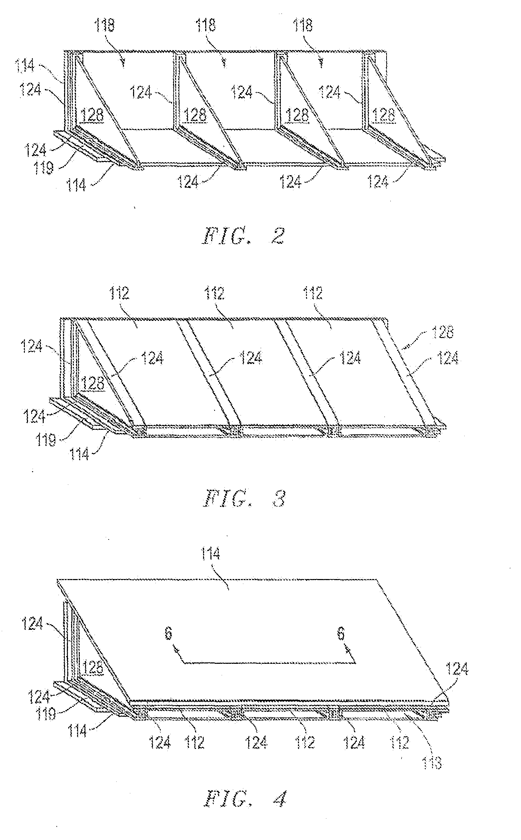

For purposes of clarity, FIG. 2 shows a partial assembly of composite members only. During actual assembly and cure, the thermoplastic conformal tool/vacuum bag would be occupying the cavity 118. One or more composite skin elements 114, which are substantially flat plates, are placed on a lay-up tool 119. A plurality of uncured composite joint members 124 are placed around the triangular, flat web members 128. Each joint member 124 is preferably formed of a woven fabric strip and contains a resin matrix in or on joint member 124.

The assembled joint members 124/web members 128 are located onto the recessed edges of tool/vacuum bag 112. A plurality of assemblies (112/124/128) are placed onto skin element 114 at spaced intervals determined principally by tool/vacuum bag 112, as shown in FIG. 3. Each tool/vacuum bag 112 is structured to dimensions that substantially conform to the intended cavity 118 as noted above. A second skin element 114 is placed over the previously assembled elements to complete the uncured structure, as shown in FIG. 4. Skin 114 may be either cured or uncured, but in a preferred embodiment of the invention, it is already cured to provide the desired configuration and dimensional tolerances in order to simplify the assembly tooling that is required. Also shown in FIG. 4, the upper and lower skins 114 do not join each other at the narrow ends, leaving opening 113 at each cavity 118. The cross-ssctional geometry of cavity 118 depends on the particular geometry of composite structure to be cured. In the embodiment of FIGS. 1 - 7, the cross-sectional geometry of cavity 118 is substantially rectangular in shape.

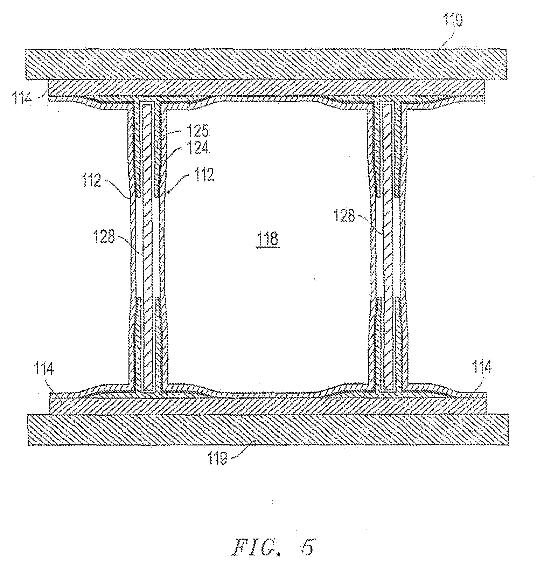

Referring to FIGS. 5 - 7, composite joint member 124 may comprise an uncured composite whose shape resembles, but is not limited to, the Greek letter π or "pi" and has a longitudinal crossbar or base with two longitudinal legs extending therefrom. A groove or channel 125 is defined between the two legs. Web 128 is placed into channels 125 of the uncured composite joint member 124. The two legs of the uncured composite joint member 124 closely receive and straddle the thickness of the web 128. Web 128 may be a cured or uncured composite material. Also web 128 maybe fabricated from metal.

The composite joint member 124 and web 128 are treated with a thermoset resin, such as an epoxy, to provide a bonding medium for these materials during cure. An overwrap 126 (FIG. 6) may be applied over composite joint member 124 to be joined to improve bond strength between the member 124 and web 128. The overwrap is an uncured laminating material such as a woven cloth or reinforcing fiber that may have laminating resin, such as epoxy, impregnated therein. Overwrap 126 maybe placed on composite joint member 124, extending from skin 114 to web 128.

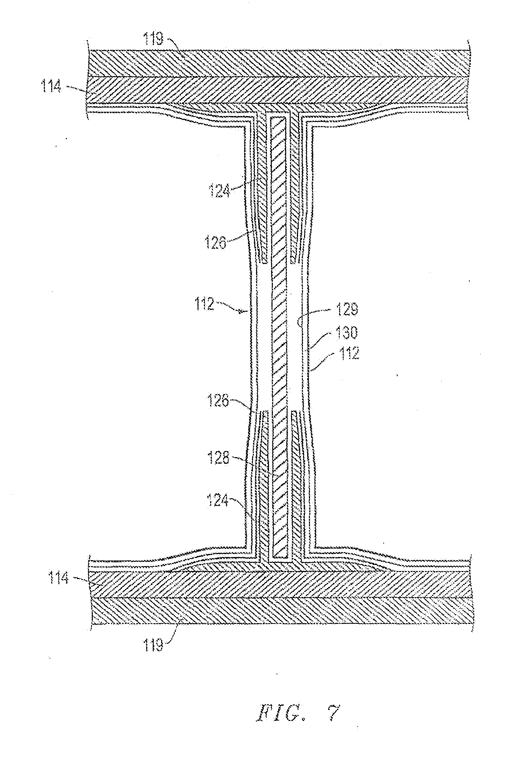

Skins 114, composite joint members 124, webs 128, and tool/vacuum bags 112 are assembled and sealed to an external vacuum bag which, in turn, is sealed to the external tool surfaces 119. A vacuum fitting pierces and seals into an appropriate portion of the external vacuum bag which envelopes the assembly. A vacuum hose is attached to the fitting and vacuum is drawn on the entire assembly. As shown in FIG. 7, the sides of tool/vacuum bag 112 expand outward, compressing composite members 124 and pressing tightly against webs 128 and skins 114. This debulking procedure is well known to those skilled in the art.

While retaining the vacuum, the assembly shown in FIG. 7, is heated internally (i.e., within the individual bags 112), rather than applying heat externally via an autoclave or oven, according to a thermal profile suitable for curing the composite joint member 124. Structural bonds are thereby created that integrally link composite joint members 124 to webs 128 and skins 114 to fabricate the desired composite structure.

As will be described herein greater detail, heat and pressure are applied to the debulked assembly internally relative to the bags (i.e., rather than externally with an oven or autoclave) according to a temperature and pressure profile appropriate for the thermosetting resin used. For example, in the case of epoxy laminating resins that are used in most aerospace application, the temperature for cure is generally about 350 degrees F. However, for the thermoplastic conformal tool/vacuum bag to soften and consolidate the laminate under pressure, the temperature should be at least about 30 to 50 degrees F above the VICAT softening point (a standard ASTM test) of the particular thermoplastic material. For ABS thermoplastic resin, this ranges from 210 to 320 degrees F. The vacuum pressure applied can range up to atmospheric (14 psia), depending on the resin system. The curing process creates structural bonds that integrally link the composite to the web members and skin.

Following completion of the required cure cycle, the external vacuum bag and tooling, if any, are removed, yielding a completed cured assembly. The assembly is then internally re-heated (again, without an oven or autoclave) to a temperature below that which was reached during final cure, but high enough to cause the conformal tools/vacuum bags 112 to re-soften and collapse. At this point, they are easily removed by pulling them outward through openings 113 (FIG. 4) and the thermoplastic material is subsequently recycled or discarded. For ABS thermoplastic resin, the re-heat temperature may range from 285 to 320 degrees F, for some embodiments.

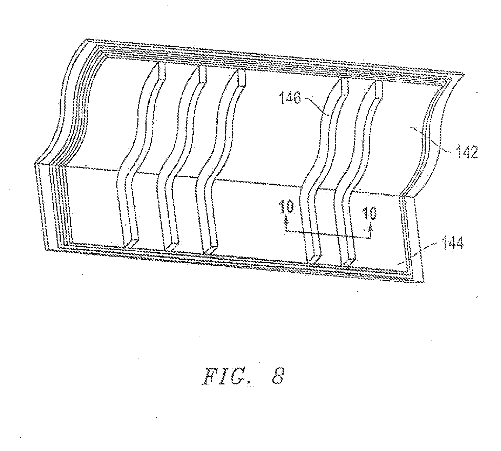

The thermoplastic conformal tool/vacuum bag of this invention also can serve as a locating tool in most applications. FIG. 8 is an isometric view of another embodiment of the thermoplastic conformal tool/vacuum bag 142. The geometric form of tool/vacuum bag 142 provides the function of locating and/or orienting the composite sub-elements during lay-up and cure, particularly for highly contoured skin members or hat stiffeners (not shown). Tool/vacuum bag 142 has a base portion 144 and a plurality of hollow channels 146 extending outwardly from base portion 144. Base portion 144 has a straight section and a curved section.

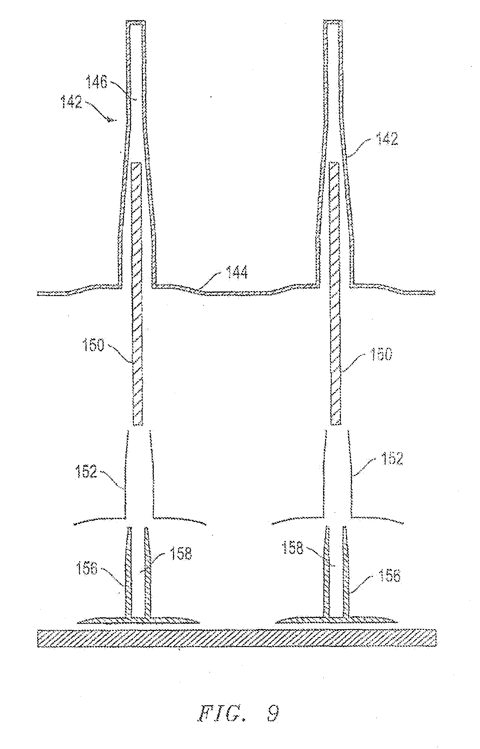

As shown in FIG. 9, a blade stiffener 150 is placed within a channel 158 of a composite joint member 156 that is similar to joint member 124 of FIGS. 1 - 7. Joint member 156 may be treated with a thermosettable resin. An overwrap 152 may be placed over at least a portion of each blade 150 and composite joint member 156. These sub-assemblies are placed into the channels 146 of tool/vacuum bag 142 which is then placed and sealed onto a cure tool. In doing this, tool/vacuum bag 142 simplifies location and/or orientation of the structures during assembly and then functions as a vacuum bag for debulking and cure, as discussed herein.

In some embodiment, the bags may be formed from cross-linked polyethylene, and are relatively stiff at room temperature to support and hold the components in place prior to cure. The bags are generally shaped in complement to the interiors of the cavities in which they are located. At elevated temperatures, however, the bags soften and almost completely conform to the cavity interiors as they transition to a rubber-like texture.

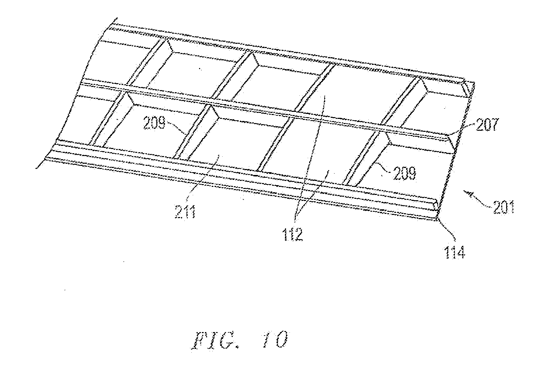

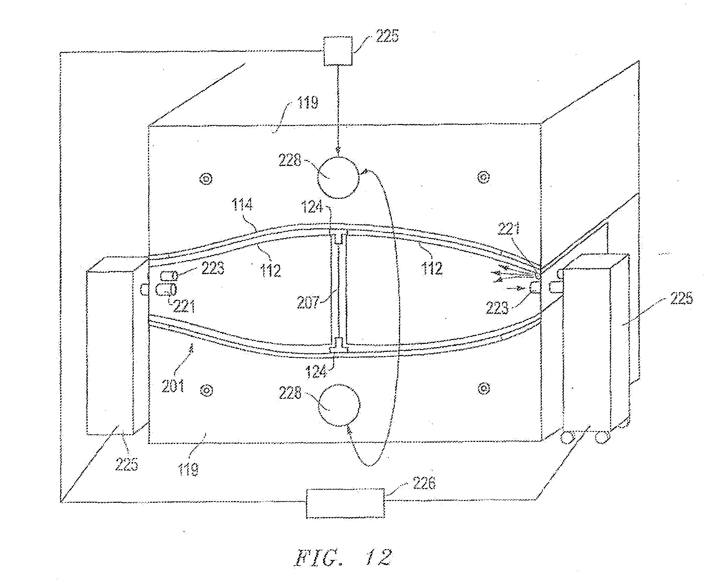

Referring now to FIGS. 10 - 13, embodiments of a system, method, and apparatus for fabricating and curing large, unitized three-dimensional composite structures without the need for an autoclave or oven are shown. For example, FIGS. 10-12 depict an exemplary wing box 201 having upper and lower wing skins 114. The wing skins 114 are separated and supported by one or more truss-like spars 207 that extend longitudinally with respect to the wing box 201, and a plurality of ribs 209 that extend laterally with respect thereto. The open spaces between the skins 114, spars 207, and ribs 209 form the bays or cavities 118 previously described. Joints between these components are provided by the uncured composite joint members 124 (FIG. 12), as described herein.

Each cavity 118 provides a location for one of the bags 112 described herein. In FIG. 10, only two of the bags 112 are shown in two of the cavities 118, for illustration purposes. However, when fabricating wing box 201, every cavity 118 would contain its own bag 112 as described herein with respect to other embodiments. As best shown in FIG. 12, each bag 112 is provided with one or more heated air ports 221 for pumping heated air into bag 112, and one or more air exit ports 223 for releasing air from bag 118. Ports 221, 223 permit heated air to be circulated into and out of each bag 118,

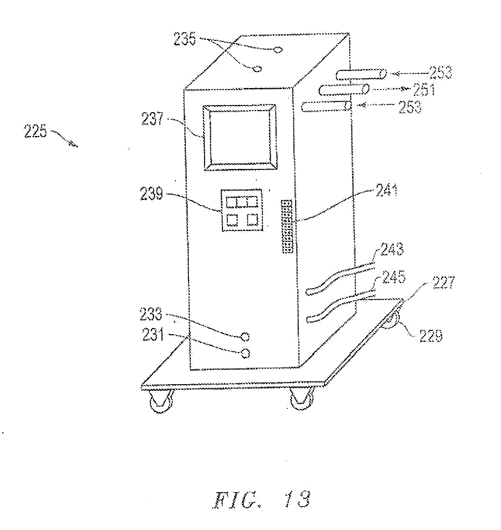

In the embodiment shown, each bag 118 and set of ports 221, 223 also is provided with its own, independent bay heating module 225 (FIGS. 12 and 13). Module 225 may be mounted to a platform 227 with casters 229 for portability, and daisy-chained or centrally controlled 226 with other modules 225 for compressed air 231 for air flow, power 233 for heat, and other control features. Optional connections 235 may be provided on module 225 for overhead air and power drops, thereby eliminating trip hazards. In the illustrated embodiment, module 22 has a data logger 237, a programmed logic controller (PLC) 239, thermocouple (T/C) jacks 241, a transducer line 243 and a vacuum source line 245.

Module 225 also is provided with one or more hot air injectors 251 for heated air port(s) 221, and one or more return air sources 253 for air exit port(s) 223. These injectors and ports may be linked via hoses, tubing, or the like. Thus, in one embodiment, each bag 118 is individually heated by its own module 225 and cycled to cure adjacent ones of the uncured preforms as described herein. In addition, the tool or lay-up table 119 may be formed with internal ports 228 for directly heating the tool 119 (if required) with one or more additional, independent modules 225 that are likewise centrally controlled.

The invention has significant advantages. The method of this invention is designed to reduces tooling and production costs, while improving reliability (i.e., fewer tool/vacuum bag failures). In this method, pressure distribution in the tool/vacuum bag is improved and bridging is significantly reduced or eliminated during cure of composite structures at 350 degrees F at a vacuum. Additionally, this method allows for greatly simplified removal of tool/vacuum bags in difficult geometry, i.e., inner trapped locations. The thermoplastic conformal tool/vacuum bag is rigid at room temperature and may be used to build or lay up the composite members, i.e., temporary tooling that supports parts or materials during fabrication until completely ready for cure. The tool/vacuum bag of this invention may be thermally formed to any desired shape based on the geometry of the composite structure, The thermoplastic conformal tool/vacuum bag reforms during the consolidation process of cure and then collapses when re-heated for easy removal from trapped geometries. It also enables the fabricator to greatly reduce the number of fasteners used in typical composite structure assemblies and do so in a simplified manner.

For manufacturers of large-scale unitized composite structures, the invention eliminates the need for expensive, fixed facilities such as large ovens and autoclaves. The size of a manufactured structure is no longer a limiting factor. Instead of having to move the assembly to an oven or autoclave, it can now remain stationary. This reduces the risk and expense involved in transporting large assemblies. The cure process equipment now becomes portable as it can be easily taken to any work site. This design greatly reduces the logisitics and complexity of manufacturing large structures.

The system further provides much more precision in controlling both the heat-up rate and the overall temperature of an assembly during cure, which enhances quality control. In addition, material out-time concerns can be eliminated by assembling and curing discrete sections of a structure, one at a time. Moreover, thermoplastic bag removal after co-bond or cure is greatly simplified without inducing unwanted thermal stresses to the cured structure.

In one embodiment, the invention provides numerous advantages for the wing box application. The porting through spar perforations to the bag interiors provides quick and even heat transfer, and simplified venting of air and volatiles to the vacuum source. The invention provides greater dimensional control by applying pressure and heat toward outer mold line (OML) surfaces and substructure locations. Mechanical support of truss-like spars and rib webs obviates pressure differentials, and there is a low risk of sealing one bag to another.

While the invention has been shown or described in only some of its forms, it should be apparent to those skilled in the art that it is not so limited, but is susceptible to various changes without departing from the scope of the invention.

## Claims

1. A method of fabricating and curing a composite structure, comprising:
(a) providing a composite structure having uncured components, and cavities of open spaces defined between the uncured components;
(b) positioning a bag in at least some of the cavities of open spaces;
(c) providing each bag with inlet and outlet air ports; and
(d) circulating heated air through each bag via respective ones of the inlet and outlet ports to cure the uncured components.

2. A method according to Claim 1, further comprising cooling the bags through said respective ones of the inlet and outlet ports to cool the cured composite structure, and then preheating the bags through said respective ones of the inlet and outlet ports to a temperature lower than a temperature of step (d) to soften the bags and remove them from the cured composite structure.

3. A method according to Claim 1 or Claim 2, wherein step (d) comprises heating the bags with a bay heating module.

4. A method according to Claim 3, wherein the bay heating module comprises a plurality of independent bay heating modules that are collectively controlled for air flow and heat.

5. A method according to Claim 3 or Claim 4, wherein the bay heating module comprises a data logger, a programmed logic controlled (PLC), thermocouple jacks, a transducer line, and a vacuum source line.

6. A method according to any one of Claims 3 to 5, wherein the bay heating module has at least one hot air injector for the inlet port, and at least one return air source for the outlet air port, which are linked via hoses.

7. A method according to any one of the receding claims, wherein step (d) occurs without an autoclave or oven.

8. A method according to any one of the receding claims, wherein the composite structure includes uncured components and cured components.

9. A method according to Claim 8, wherein the composite structure is a wing box, the cured components comprise upper and lower wing skins, spars and ribs, and the uncured components comprise three-dimensional woven composite preforms.
